# EUROPEAN PATENT APPLICATION

(11) **EP 1 895 338 A2**
(43) Date of publication of application: **05.03.2008**
(21) Application number: 07016635.0
(22) Date of filing: 24.08.2007
(51) Int. Cl.: G02B 6/04, G02B 6/42, G02B 6/44

(54) **Fiber bundle and light-source equipment**

(30) Priority: 29.08.2006 JP 2006232828
(71) Applicant: Sumitomo Electric Industries, Ltd., Osaka-shi, Osaka 541-0041 (JP)
(72) Inventor: Endo, Soichi, Sakae-ku Yokohama-shi Kanagawa (JP); Nakazato, Koji, Sakae-ku Yokohama-shi Kanagawa (JP); Hatayama, Hitoshi, Sakae-ku Yokohama-shi Kanagawa (JP)
(74) Representative: HOFFMANN EITLE

(57) **Abstract**

A fiber bundle is provided which has various advantages: limitation in terms of heat-resistant temperature is less; its manufacturing is easy and low-cost; and it will not degrade the optical fiber properties. The fiber bundle 10, which transmits through element fibers 11 light incident from light sources and emits the light from the respective output surface 11A altogether, has a structure in which at least one end parts of the element fibers 11 are collectively inserted into a metal sleeve 12 and the one end parts are solidified to be united with the sleeve 12, and in which a metal 13, that is a filler, is filled among the element fibers 11, in the sleeve 12, over a region of a given length L in the longitudinal direction of the sleeve 12 from the emitting-end face 12A of the sleeve 12.

## Description

### BACKGROUND OF THE INVENTION

### Field of the Invention

The present invention relates to a fiber bundle and light source equipment including the same, which can output light as high output light by gathering light from a plurality of light sources and which can be used as light transmission means for laser exposure equipment, laser processing equipment, or the like.

### Description of the Background Art

Recently, light processing technologies are widely used and there are increasingly many opportunities to transmit light with high power density using a fiber bundle in which a plurality of optical fibers are bundled together. Generally, a conventional fiber bundle is such that the ends of a plurality of optical fibers are fixed with an adhesive. However, when reflected light returns to the end face of the fiber bundle from an irradiation target object such as a work piece which is a processing object, there are cases in which the adhesive absorbs light energy such that the temperature rises above the heat-resistant temperature, resulting in high temperature causing the damage of the adhesive. Also, the adhesive may suffer from photochemical damage. That is, since an adhesive generally has a high optical-absorption coefficient, the adhesive tends to be tattered, being degraded due to photochemical reaction. Also, there may be a risk of the adhesive being melted by the heat, because the adhesive is generally made of a material having low heat resistance and low heat conductivity.

In Japanese Patent Application Publication No. H7-56027, a fiber bundle is proposed in which a plurality of optical fibers are fixed without using an adhesive so as to improve the heat-resistance. Figure 12 is a front view showing the end face of the fiber bundle proposed in Japanese Patent Application Publication No. H7-56027. The fiber bundle is such that the coating of each optical fiber strand is removed at a part adjacent to an end thereof, and the coating-removed end parts of the optical fiber strands are bundled to be filled into a glass pipe, and in such state the glass pipe and the optical fibers are heated to be softened, drawn, and united by fusion. Thus, a number of cores 102 are formed in lines in a common cladding 103 inside a tubular silica glass layer 101.

However, such uniting work by fusion causes increase in the cost since the control of temperature in the longitudinal direction and the control of glass diameter at the time of drawing are complicated. Also, it results in a low yield. Moreover, if the temperature control is insufficient, there is a risk of the core-cladding structure of inner fibers being collapsed. In such case, the properties of the optical fiber might be deteriorated: for example, defects such as leakage of light due to decrease of numerical aperture, disorder of far-field pattern, and occurrence of scattered light might be caused.

As described above, in the case of a fiber bundle in which an end is fixed with an adhesive, the temperature of heat-resistance at the end face depends on the adhesive used and accordingly the range of use of the fiber bundle is limited. On the other hand, in the case of the fiber bundle having a structure in which a glass pipe and bundled fibers are united by fusion without using an adhesive, the unification work is difficult, resulting in cost increase, and moreover it tends to cause the degradation of optical fiber properties.

### SUMMARY OF THE INVENTION

An object of the present invention is to provide a fiber bundle having the following advantages: the temperature of its heat-resistance is less limited; the manufacturing work thereof can be done easily at low cost; and the degradation of the optical fiber properties caused by a conventional fiber bundle can be avoided.

In order to achieve the object, a fiber bundle is provided which includes a plurality of optical fibers, which have one end to receive light incident from a light source and the other end to emit the light, and a sleeve for forming the emitting end of the fiber bundle by bundling the other end parts of the optical fibers inserted therein. This fiber bundle includes a metal or glass fibers provided as a filler among the plurality of optical fibers at a given length of region, along the longitudinal direction of the sleeve, from the emitting end of the fiber bundle.

The filler may be a metal, and the plurality of optical fibers may be fixed with an adhesive inside the sleeve, at a part lying on the opposite side of the given length of region relative to the emitting end in the sleeve. Also, the filler may be a glass fiber or may be a metal coating layer provided around the circumferential surface of each optical fiber.

In addition, light-source equipment including a plurality of light sources and a fiber bundle is provided. In the light-source equipment, the fiber bundle includes a plurality of first optical fibers, each of which receives light incident on one end thereof from the corresponding one of a plurality of light sources and emits the light from the other end, a plurality of second optical fibers, and a sleeve which forms the emitting end of the fiber bundle by bundling the inserted parts at the other end of the plurality of first optical fibers and inserted parts at one end of the plurality of the second optical fibers.

These and other features, aspects, and advantages of the present invention will be better understood through the following description, appended claims, and accompanying drawings. In the explanation of the drawings, an identical mark is applied to identical elements and an overlapping explanation will be omitted.

### BRIEF DESCRIPTION OF THE DRAWINGS

Figure 1 is a schematic diagram showing a state in which an irradiation target object is irradiated with light-source equipment including a fiber bundle relating to a first embodiment of the present invention.
Figure 2A is a front view of the emitting-end face of the fiber bundle of the first embodiment, and Fig. 2B is a sectional view, including the central axis, of the emitting-end face part.
Figures 3A and 3B are schematic diagrams showing the state in which an adhesive is filled among the optical fibers at the emitting-end face part in a manufacturing process of the fiber bundle of the first embodiment, wherein Fig. 3A is a front view of the emitting-end face and Fig. 3B is a sectional view including the central axis.
Figure 4 is a sectional view, including the central axis, showing the condition in which the adhesive among the optical fibers at the emitting-end face part is removed in the manufacturing process of the fiber bundle of the first embodiment.
Figure 5 is a sectional view, including the central axis, showing the condition in which metal is filled among the optical fibers at the emitting-end face part in the manufacturing process of the fiber bundle of the first embodiment.
Figure 6 is a schematic diagram showing a state in which an irradiation target object is irradiated with light-source equipment including a fiber bundle relating to a second embodiment of the present invention.
Figure 7 is a front view of the emitting-end face of the fiber bundle of the second embodiment.
Figure 8 is a front view of the emitting-end face of a modified example of the fiber bundle of the second embodiment.
Figure 9 is a front view of the emitting-end face of the fiber bundle of a third embodiment of the present invention.
Figure 10 is a perspective view showing a metal-coated fiber.
Figure 11 is a sectional view, including the central axis, of the emitting-end face part of the fiber bundle relating to a fourth embodiment of the present invention.

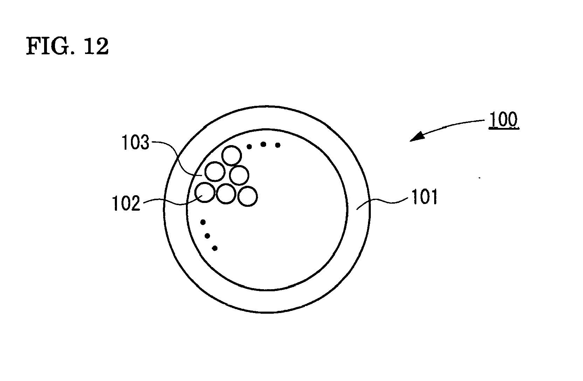

Figure 12 is a front view showing the end face of a conventional fiber bundle.

### DETAILED DESCRIPTION OF THE INVENTION

### (First embodiment)

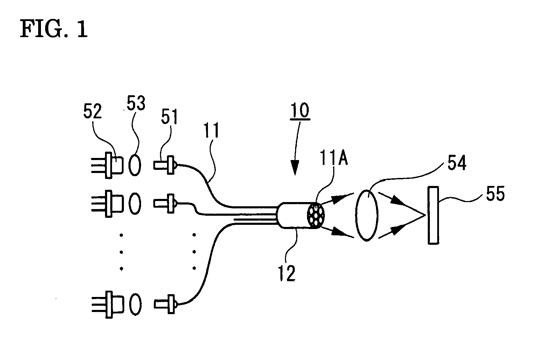

Figure 1 is a schematic diagram showing a state in which an irradiation target object 55 is irradiated with light-source equipment including a fiber bundle 10 relating to the first embodiment of the present invention. The fiber bundle 10 constitutes a part of light-source equipment for the manufacture of semiconductors: more specifically, the light-source equipment collects the output light of a plurality of laser diodes 52 and outputs the light as high output light.

The fiber bundle 10 includes a plurality of optical element fibers 11 and a metal sleeve 12 for bundling and uniting the inserted ends of the emitting side of the plurality of optical element fibers 11. The light emitted from the laser diodes 52 is incident on the element fibers 11 through a lens 53 and a connector 51 provided for each element fiber 11. The light transmitted through each element fiber 11 in the fiber bundle 10 is emitted from the output surface 11A of each element fiber 11 and irradiated through a lens 54 to a work piece 55, which is an irradiation target object.

Each element fiber 11 is an optical fiber having a core of large diameter and a cladding consisting of glass such as silica glass or the like. The number of element fibers 11 in the fiber bundle 10 is, for example, from 20 to 100.

The metal sleeve 12, which consists of stainless steel, bundles a plurality of the element fibers 11 at a part ranging in a predetermined length from the emitting end. The sleeve 12 may collectively bundle the element fibers 11 over the full length thereof.

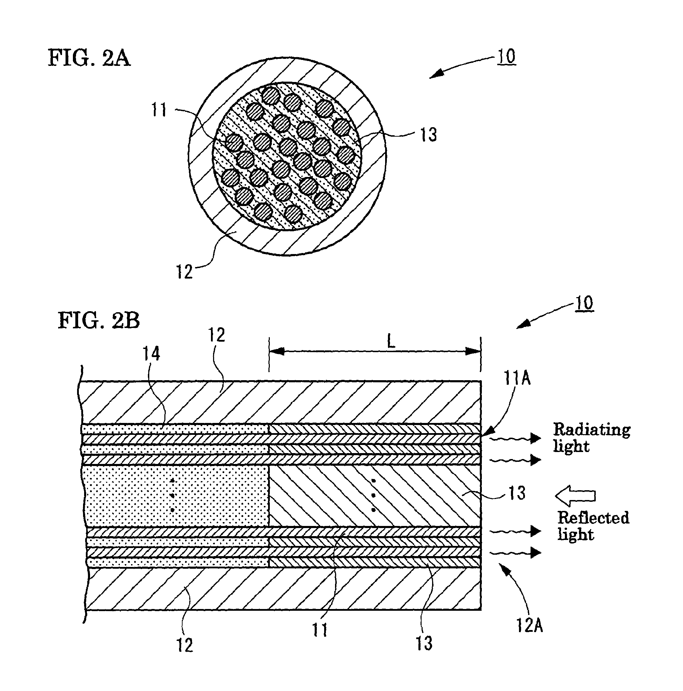

Figure 2A is a front view of the emitting-end face of a fiber bundle 10, and Fig. 2B is a sectional view, including a central axis, of the emitting-end face part. A metal 13 constituting filler and having high heat conductivity, such as aluminum, gold, or silver, for example, is filled among element fibers 11 in a sleeve 12, over a required length L from the emitting-end face 12A of the sleeve 12. Also, the parts of the element fibers 11 that lie inside the metal sleeve 12 are mutually fixed to be united with an adhesive 14, e.g., thermosetting epoxy resin, for a region located at the far side than the part filled with the metal 13, with respect to the emitting-end face.

The metal 13 is preferably a substance having high reflectivity to the wavelength of the light source to be used. In the case of 300 - 600 nm wavelength band, Aluminum is preferable, for example, and in the case of wavelength 800 - 1100 nm wavelength band, gold or silver is preferable. In such case, the metal 13 reflects return light reflected from the work piece 55 and thereby prevents various problems which might be caused when the emitting-end face 12A of the fiber bundle 10 receives the return light.

As described above, in the fiber bundle 10, a metal 13 is filled among element fibers 11 in the metal sleeve 12. Therefore, if temperature rises as a result of the emitting-end face 12A receiving the return light from a work piece 55 onto which irradiation light has been applied, the metal 13 having high heat conductivity transmits the resultant heat in a radial direction to the metal sleeve 12. As a result, the heat generated at the emitting-end face 12A can effectively be discharged outside.

Thus, it is possible to avoid a problem such as the melting of the adhesive 14, for example, which might be caused by the heat having propagated in a longitudinal direction of the element fibers 11 into the region where the adhesive 14 is filled. Also, it is possible to avoid a trouble such as the degradation in the properties of the optical fibers 11, which might be caused as a result of collapse in the core-cladding structure of the element fibers 11. Moreover, if the end face at the emitting side of the metal 13 is processed beforehand into a mirror-like surface, it is possible to reflect the return light toward the work piece and send the light energy to the target object to be processed. Thus, the use efficiency of the irradiation light increases.

The number of the element fibers 11 in the present invention may be two. In that case, the interstices between the optical fibers in the sleeve become larger. Accordingly, in the case of two fibers, the filling quantity of the metal 13 increases. Consequently, even with the same sleeve diameter, as compared with a case where a larger number of fibers are used or a case where only an adhesive is filled entirely, it is possible to more effectively discharge the heat generated at the emitting-end face 12A, since the heat propagation into the metal sleeve 12 substantially increases, resulting in an increased cooling effect.

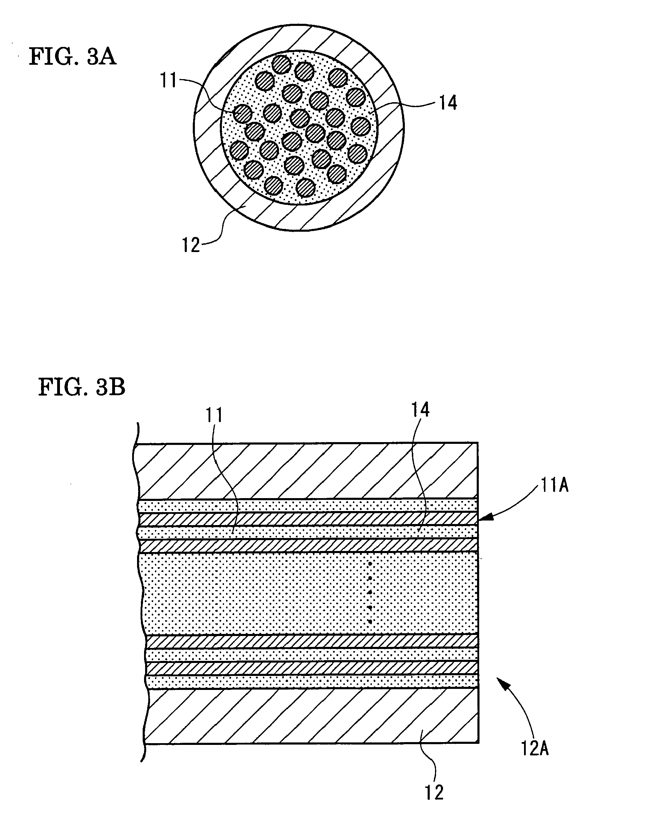

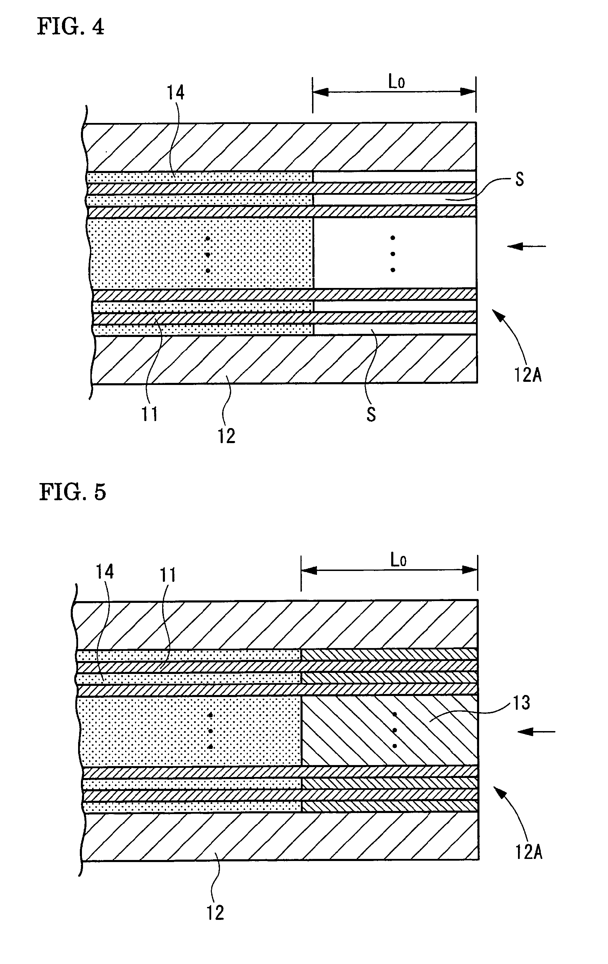

Next, the method of manufacturing the fiber bundle 10 will be described. Figures 3A and 3B are schematic diagrams showing the state in which an adhesive is filled among the optical fibers at the emitting-end face part in a manufacturing process of the fiber bundle of Fig. 1, wherein Fig. 3A is a front view of the emitting-end face and Fig. 3B is a sectional view including the central axis. Figure 4 is a sectional view, including the central axis, showing the condition in which the adhesive among the optical fibers at a part adjacent to the emitting-end face is removed in the above case, and Fig. 5 is a sectional view, including the central axis, showing the condition in which the adhesive and metal are filled among the optical fibers.

First, a plurality of element fibers 11 having a given length are collectively bundled at a part adjacent to one end that is to become the output surface 11A, and the so-bundled end parts of the element fibers are inserted into a metal sleeve 12. Next, a resin, which is adhesive 14, is filled into the interstices formed among the element fibers 11 inside the sleeve 12 (Figs. 3 A, 3B).

Thereafter, a solvent is permeated from the side of the emitting-end face 12A of the sleeve 12 which corresponds to the output surface 11A of the element fibers 11, so as to shallowly remove the adhesive 14 among the element fibers 11 in the range of a given length L₀ (Fig. 4). Thus, interstices S are formed, among the element fibers 11 in the sleeve 12, over a region of the given length L₀ from the emitting-end face 12A.

Next, the metal 13 having high reflectivity and heat resistance properties is poured to fill the interstices S formed by removing the adhesive 14 (Fig. 5). Thus, the metal 13 is filled, from the emitting-end face 12A side of the sleeve 12, into the interstices between the element fibers 11 so as to eliminate the interstices in the region of the given length L₀. Lastly, when a mirror-like surface processing is applied to the emitting-end face 12A so as to enhance reflectivity, the manufacture of the fiber bundle 10 is completed.

### (Second embodiment)

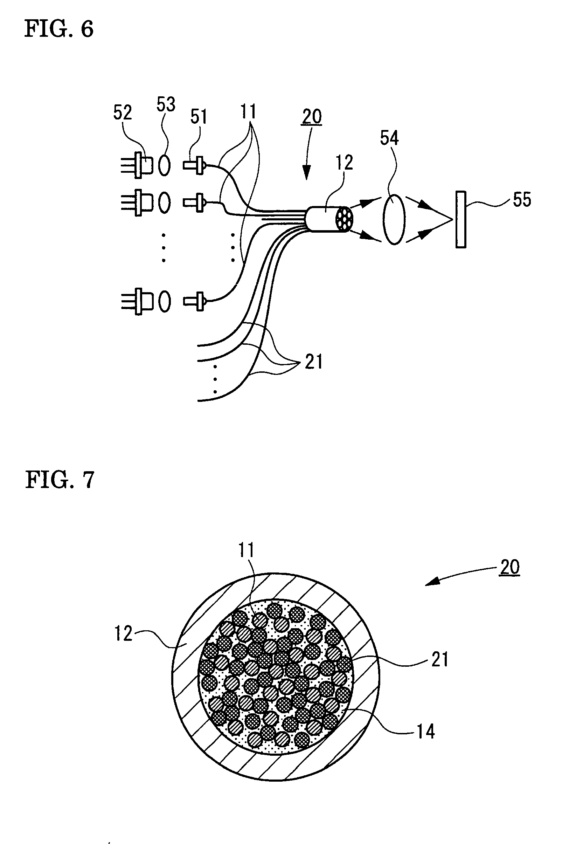

Figure 6 is a schematic diagram showing a state in which an irradiation target object 55 is irradiated with light-source equipment including a fiber bundle 20 relating to the second embodiment of the present invention. Figure 7 is a front view of the emitting-end face of the fiber bundle 20. The fiber bundle 20 constitutes a part of light-source equipment for the manufacture of a semiconductor as in the first embodiment.

The fiber bundle 20 includes a plurality of glass fibers 21 (second optical fiber) in addition to a plurality of element fibers 11 (first optical fiber) and the metal sleeve 12. The glass fiber 21, which is made of the same glass as that of the element fiber 11, has far higher heat resistance than that of the adhesive 14. The element fibers 11 and the glass fibers 21 are substantially uniformly arranged in the metal sleeve 12, and fixed to the sleeve 12 by solidifying with the adhesive 14 over the entire length of the sleeve 12. That is, in the second embodiment, the area occupied by the resin, which is the adhesive 14, in the emitting-end face is decreased by providing the glass fibers 21 in the interstices among the element fibers 11 in the sleeve 12.

According to the second embodiment, by providing the glass fibers 21, it is made possible to suppress, more as compared with the first embodiment, the move of the element fibers 11 in the sleeve 12 until the adhesive 14 becomes solid (movement suppression effect). Also, the heat resistant properties can be improved accordingly, as the glass fibers 21 made of high heat resistant glass are provided at a part of the area where the adhesive 14 is otherwise to be provided. As a result, the rise of temperature due to the receiving of the return light decreases, and accordingly the occurrence of end-face damage caused by the temperature rise is lessened.

Moreover, it is possible to adjust the quantity of exposure to the work piece 55 which is an irradiation target object. That is, the quantity of exposure can be adjusted by switching ON/OFF of a laser diode, which is provided so as to be a light source through a connector at the incident end face of each glass fiber 21. Moreover, the glass fibers 21 can also be used as the spares for the element fibers 11. That is, if necessary exposure quantity cannot be obtained as a result of damage or breakage caused to an element fiber 11 during the manufacture or use of a fiber bundle 20, it is possible to substitute a glass fiber 21 for the damaged element fiber 11. Thus, it is possible to save the labor of replacing the damaged fiber bundle 20 with a new fiber bundle, and accordingly the repair cost can be decreased.

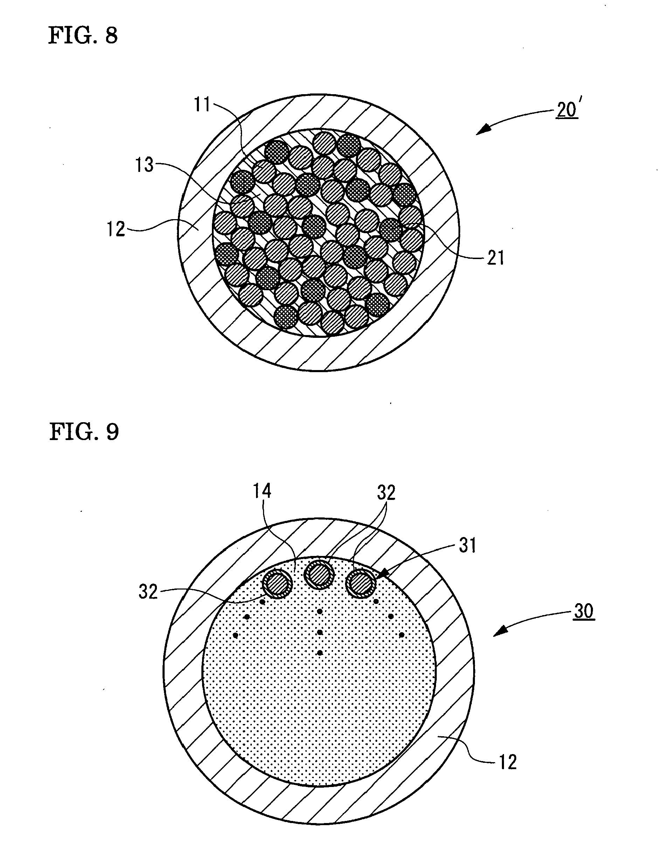

As in the case of the fiber bundle 20' shown in Fig. 8, metal 13 may be filled in a region adjacent to the emitting-end face 12A of the sleeve 12. In other words, the adhesive 14 that is filled in the interstices among the element fibers 11 and the glass fibers 21 may be removed in a given length of region adjacent to the emitting-end face, and the metal 13 may be filled therein. This will further improve the heat resistance properties.

### (Third embodiment)

Figure 9 is a front view of the emitting-end face of a fiber bundle 30 relating to a third embodiment of the present invention. The fiber bundle 30 constitutes a part of light-source equipment for the manufacture of a semiconductor as in the first embodiment. In the fiber bundle 30, the optical fiber is a metal-coated fiber 31, in which a metal coating layer is provided, consisting filler, on the circumferential surface of an optical fiber. Differing from the first embodiment, the interstices among the metal-coated fibers 31 in the sleeve 12 are filled with an adhesive 14 over the full length so that the metal-coated fibers 31 and the sleeve 12 are united.

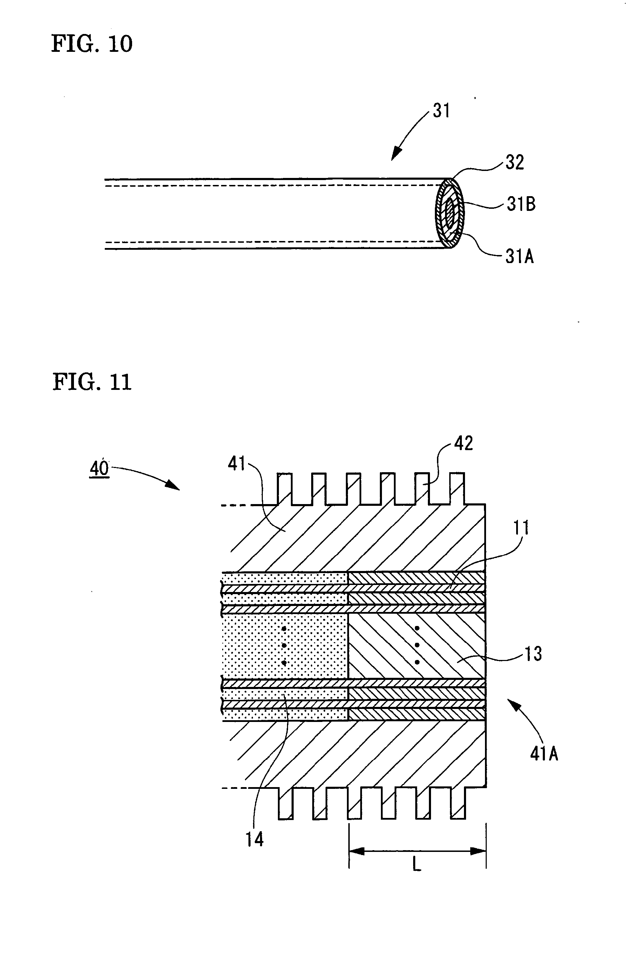

Figure 10 is a perspective view showing the metal-coated fiber 31. The metal-coated fiber 31 is such that a metal 32, for example, aluminum, gold, silver, or the like, which has high thermal conductivity and which can be plated, is coated on the circumferential surface of the cladding 31A. The metal 32 is preferably a metal having high reflectivity to the wavelength of the light source to be used. For example, Aluminum is preferable in the case of 300 - 600 nm wavelength band, and gold or silver is preferable in the case of wavelength 800 - 1100 nm wavelength band. In Fig. 10, the mark 31B indicates the core of the optical fiber.

In the fiber bundle 30, if light reflected from a work piece hits the emitting-end face and heat the emitting-end face, the heat can be transmitted in a longitudinal direction from the emitting-end face by means of thermal conductivity of the metal 32 coated on each fiber. Therefore, it is possible to avoid various troubles that have been caused in the past by the heating-up of an adhesive 14 provided at a region adjacent to the emitting-end face: for example, it is possible to prevent the adhesive from being degraded to become crumbly due to photochemical reaction, or to prevent the adhesive from dissolving due to the heat.

In the fiber bundle 30, the adhesive 14 among the metal-coated fibers 31 may be removed over a given length in the longitudinal direction of the sleeve 12 from the emitting-end face of the sleeve 12, and the metal 13 may be filled in thus formed interstices. This structure would more improve the heat resistance properties. Also, in the fiber bundle 30, glass fibers may additionally be arranged inside the sleeve 12. If such structure is adopted, it is possible to obtain various effects such as described with respect to the second embodiment: for example, the movement suppression effect, the improvement of the heat resistance properties, the function of adjusting the exposure quantity, spare function, or complementing function.

### (Fourth embodiment)

Figure 11 is a sectional view, including the central axis, of the emitting-end face part of a fiber bundle 40 relating to a fourth embodiment of the present invention. The fiber bundle 40 constitutes a part of the light-source equipment for manufacturing semiconductors as in the first to third embodiments.

The fiber bundle 40 uses the element fibers 11, which are the same as in the first embodiment, and a metal sleeve 41 into which the element fibers 11 are inserted and integrally fixed thereto has a heat sink including fins 42 for radiation of heat on the circumferential surface in an area of predetermined length from the emitting-end face. The sleeve 41 is made of the same stainless steel as in the first embodiment. Also, in the fourth embodiment, a metal 13 is filled in the interstices among the element fibers 11 over a given length of region from the emitting-end face 41A of the sleeve 41 as in the first embodiment so that the element fibers and the sleeve 41 are integrally united.

While this invention has been described in connection with what is presently considered to be the most practical and preferred embodiments, the invention is not limited to the disclosed embodiments, but on the contrary, is intended to cover various modifications and equivalent arrangements included within the spirit and scope of the appended claims. For example, in the fiber bundle of the fourth embodiment, glass fibers may be additionally arranged in the sleeve 12 as in the second embodiment. Also, a metal coating layer may be provided on the circumferential surface of the element fiber 11 as in the third embodiment.

The fiber bundle of the present invention is useful for the means of the transmission of exposure irradiation light of light-source equipment for manufacturing semiconductors, because it has various advantageous effects: for example, limitation in terms of heat-resistant temperature is less; its manufacturing is easy and low-cost; and moreover it will not degrade the optical fiber properties.

The entire disclosure of Japanese Patent Application No. 2006-232828 filed on August 29, 2006, including specification, claims, drawings, and summary, are incorporated herein in its entirety by reference.

## Claims

1. A fiber bundle comprising
a plurality of optical fibers, one end thereof receiving light incident from a light source, the other end emitting the light, and
a sleeve for forming the emitting end of the fiber bundle by bundling the other end parts of the optical fibers inserted therein, wherein
a metal or glass fibers are provided as filler among the plurality of optical fibers at a given length of region, along the longitudinal direction of the sleeve, from the emitting end of the fiber bundle.

2. A fiber bundle as set forth in claim 1, wherein
the filler is a metal, and the plurality of optical fibers are fixed with an adhesive inside the sleeve, at a part lying on the opposite side of the given length of region relative to the emitting end in the sleeve.

3. A fiber bundle as set forth in claim 1, wherein
the filler is a glass fiber.

4. A fiber bundle as set forth in claim 1, wherein
the filler is a metal coating layer provided around the circumferential surface of each optical fiber.

5. Light-source equipment comprising a plurality of light sources and a fiber bundle, the fiber bundle including a plurality of first optical fibers, a plurality of second optical fibers, and a sleeve, wherein
each of the first optical fibers receives light incident on one end thereof from the corresponding one of the plurality of light sources, and emits the light from the other end, and the sleeve forms the emitting end of the fiber bundle by bundling the inserted parts at the other end of the plurality of first optical fibers and inserted parts at one end of the plurality of the second optical fibers.
